# EUROPÄISCHE PATENTANMELDUNG

(11) **EP 2 832 618 A1**
(43) Veröffentlichungstag der Anmeldung: **04.02.2015**
(21) Anmeldenummer: 14175904.3
(22) Anmeldetag: 07.07.2014
(51) Int. Cl.: B61C 17/04, B61D 33/00, B60N 3/06, B60N 2/30, B60N 2/32

(54) **Ergonomisch flexibler Fahrerstand eines Schienenfahrzeugs**

(30) Priorität: 29.07.2013 DE 102013214779
(71) Anmelder: Siemens Aktiengesellschaft, 80333 München (DE)
(72) Erfinder: Schlaht, Jürgen, 90763 Fürth (DE)

(57) **Zusammenfassung**

Die Erfindung betrifft ein Schienenfahrzeug mit zumindest einer Fahrerkabine, welche mindestens eine Bedieneinheit (7) zur Steuerung des Schienenfahrzeugs und zumindest einen Fahrersitz (1) mit einer Rückenlehne (3) und einer Sitzfläche (2) umfasst. Die Bedieneinheit (7) ist in einer ersten Stellung ergonomisch so zum Fahrersitz (1) ausgerichtet, dass sie von einem auf dem Fahrersitz (1) sitzenden Fahrer aus bedienbar ist. Der Fahrersitz (1) ist höhenverstellbar ausgebildet und er umfasst einen Klappmechanismus zum Herunterklappen der Sitzfläche (2) des Fahrersitzes (1), so dass bei heruntergeklappter Sitzfläche (2), die Sitzfläche (2) und die Rückenlehne (3) des Fahrersitzes (1) eine Stehlehne für den Fahrer bilden. Die zumindest eine Bedieneinheit (7) ist ebenfalls höhenverstellbar ausgebildet, so dass sie in einer zweiten Stellung ergonomisch so zur Stehlehne ausgerichtet ist, dass sie von einem sich stehend an die Stehlehne anlehnenden Fahrer aus bedienbar ist.

## Beschreibung

Die Erfindung betrifft ein Schienenfahrzeug mit zumindest einer Fahrerkabine, welche mindestens eine Bedieneinheit und zumindest einen Fahrersitz mit einer Rückenlehne und einer Sitzfläche umfasst, dessen Bedieneinheit in einer ersten Stellung ergonomisch so zum Fahrersitz ausgerichtet ist, dass sie von einem auf dem Fahrersitz sitzenden Fahrer aus bedienbar ist.

Die EP1717098B1 offenbart einen Fahrgastsitz für ein Fahrzeug der Personenbeförderung mit einer Rückenlehne und einer Sitzfläche, welche Sitzfläche an einem Schwenkarm angeordnet hochklappbar und um eine Achse senkrecht zu einem Fußboden des Fahrzeugs zu einer Seitenwand des Fahrzeugs schwenkbar ist, so dass die Rückenlehne als Lehne für einen Rollstuhl nutzbar ist. So ist ein Fahrgastsitz platzsparend sehr schnell umbaubar.

Ist nur sehr begrenzter Raum zur Personenbeförderung verfügbar, sind anstelle von Fahrgastsitzen auch Stehlehnen bekannt geworden. Diese finden sich ebenfalls in Schienenfahrzeugen des Personenverkehrs. Sie dienen stehenden Fahrgästen zum Anlehnen. Die Firma "Solutions Design & Branding Companies AG" veröffentlichte 2008 ein Konzept, solche Stehlehnen auch in Flugzeugen einzusetzen (siehe auch Artikel "Stehsitze im Flugzeug", veröffentlicht am 01.02.2008 um 12:02 Uhr auf "http://www.t-online.de/reisen/flugreisen/id_14098026/flugreisen-stehsitze-im-flugzeug-als-zukunftskonzept.html", abgerufen am 29.07.2013).

Für Fahrersitze in Schienenfahrzeugen ist üblicherweise ausreichend Raum vorhanden. Im Sinne einer maximalen Nutzung der Länge von Schienenfahrzeugen zur Personenbeförderung ist es jedoch sinnvoll, den für den Fahrerstand benötigten Platz so klein wie möglich zu halten. An der Stelle des eingesparten Platzes für einen verkleinerten Fahrerstand können weitere Sitze für die Fahrgäste angebracht werden.

Der Erfindung liegt die Aufgabe zugrunde, einen ergonomisch verbesserten Arbeitsplatz für den Fahrer eines Schienenfahrzeugs bereit zu stellen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Schienenfahrzeug umfasst zumindest eine Fahrerkabine, welche mindestens eine Bedieneinheit und zumindest einen Fahrersitz mit einer Rückenlehne und einer Sitzfläche umfasst, welche Bedieneinheit in einer ersten Stellung ergonomisch so zum Fahrersitz ausgerichtet ist, dass sie von einem auf dem Fahrersitz sitzenden Fahrer aus bedienbar ist. Der Fahrersitz ist erfindungsgemäß zu einem Fußboden der Fahrerkabine des Schienenfahrzeugs in der Höhe verstellbar. Zusätzlich ist die Sitzfläche des Fahrersitzes herunterklappbar, so dass die heruntergeklappte Sitzfläche und die Rückenlehne des Fahrersitzes eine Stehlehne für den Fahrer bilden. Daher ist auch die Stehlehne in höhenverstellbar. Sie dient dem stehenden Fahrer zum Anlehnen. Sitzfläche und Rückenlehne sind entsprechend ausgebildet. Gleichzeitig ist die zumindest eine Bedieneinheit zumindest höhenverstellbar, so dass sie in einer zweiten Stellung ergonomisch so zur Stehlehne ausgerichtet ist, dass sie von einem sich stehend an die Stehlehne anlehnenden Fahrer aus bedienbar ist.

Damit der Fahrersitz höhenverstellbar ist, weist er zumindest einen Mechanismus zur Höhenverstellung des Fahrersitzes auf. Analog weist er zumindest einen Klappmechanismus zum Herunterklappen der Sitzfläche des Fahrersitzes auf. Auch die Bedieneinheit umfasst entsprechend zumindest einen Mechanismus zur Höhenverstellung der zumindest einen Bedieneinheit.
Der Fahrer kann somit einfach und schnell seine Arbeitshaltung zwischen sitzend und stehend ändern. Ein Vorteil der Erfindung besteht in einer verbesserten Ergonomie für den Fahrer bei gleichzeitig verringerter einseitiger Belastung seines Körpers durch einseitige Sitz- oder Steh-Belastungen. Krankheitsbedingte Fehlzeiten des Fahrers sind dadurch reduziert. Gleichzeitig wird der Platzbedarf für den Arbeitsplatz des Fahrers minimiert. Auch Installations- und Montagekosten für den Arbeitsplatz können gesenkt werden.

Die Fahrerkabine eines Schienenfahrzeugs wird gelegentlich auch als Führerstand bezeichnet. Die mindestens eine Bedieneinheit dient zur Bedienung von zumindest einer oder mehrerer Funktionen des Schienenfahrzeugs, insbesondere zur Steuerung des Schienenfahrzeugs, und ist entsprechend ausgebildet. Dazu kann sie vielerlei Formen annehmen. Bekannt sind beispielsweise Bedienpulte mit mehreren Bedienelementen oder Touch-Displays zur Bedienung von zumindest einer oder mehreren, gegebenenfalls wechselnden Funktionen. Weitergebildet umfasst die zumindest eine Bedieneinheit wenigstens ein Display, insbesondere ein Touch-Display. Darüber hinaus kann das Schienenfahrzeug in der Fahrerkabine zumindest eine weitere Anzeige, wie beispielsweise ein Head-Up-Display in einer Frontscheibe der Fahrerkabine, umfassen, welches unbeweglich oder an einer flexiblen Halterung individuell für den Fahrer einstellbar in der Fahrerkabine angeordnet ist.

Wie oben bereits ausgeführt, weist der Fahrersitz einen entsprechend ausgestalteten Klappmechanismus auf, um die Sitzfläche des Fahrersitzes herunter zu klappen. Gemäß einer ersten Ausführungsform ist die Sitzfläche des Fahrersitzes um eine parallel zu dem Fußboden der Fahrerkabine des Schienenfahrzeugs verlaufende Achse klappbar. Die Achse schließt gemäß einem Ausführungsbeispiel unmittelbar unterhalb der Rückenlehne an ein unteres Ende der Rückenlehne an. Sie kann aber auch in horizontaler und/oder vertikaler Richtung zur Rückenlehne versetzt angeordnet sein, wobei die Sitzfläche dann insbesondere über einen Arm mit einer vorgegebenen Länge größer Null mit der Achse verbunden ist.

Gemäß einer weiteren Ausgestaltung ist auch die Rückenlehne mit der Achse verbunden, insbesondere ebenfalls drehbar um die Achse. So ist eine Neigung der Rückenlehne einstellbar.

Eine weitere Weiterbildung der Erfindung sieht vor, dass der Fahrersitz, respektive die Stehlehne, und damit sowohl die Rückenlehne, als auch die Sitzfläche des Fahrersitzes an zumindest einem gemeinsamen Standbein angeordnet sind. Dazu dient beispielsweise die Achse, um welche die Sitzfläche schwenkbar gelagert und damit herunterklappbar ausgestaltet ist und mit welcher gegebenenfalls auch die Rückenlehne verbunden ist. Die horizontal verlaufende Achse ist mit dem sich in vertikale Richtung über dem Fußboden des Schienenfahrzeugs erstreckenden, zumindest einen Standbein verbunden. Das Standbein ist beispielsweise säulenförmig ausgebildet.

Der Fahrersitz umfasst gemäß einer Ausführungsform genau ein Standbein, welches insbesondere seitlich neben dem Fahrersitze angeordnet ist, mit welchem ein Ende der horizontalen Achse des Fahrersitzes verbunden ist. Es handelt sich hierbei um eine sogenannte "fliegende" Befestigung des Fahrersitzes in der Fahrerkabine des Schienenfahrzeugs.

Das Standbein weist weiterbildungsgemäß einen ersten Mechanismus zur Höhenverstellung auf, über welchen der Fahrersitz respektive die Stehlehne, und damit die Sitzfläche und die Rückenlehne höhenverstellbar sind. Insbesondere ist der erste Mechanismus zur Höhenverstellung geeignet, die horizontale Achse des Fahrersitzes in der Höhe zu verstellen.

Das Standbein ist seinerseits zum Fußboden der Fahrerkabine des Schienenfahrzeugs höhenverstellbar, z.B. in seiner Länge veränderlich, beispielsweise teleskopierbar. Zusätzlich oder alternativ ist die horizontale Achse des Fahrersitzes im Standbein verschiebbar und somit höhenverstellbar gelagert.

Der erste Mechanismus zur Höhenverstellung ist beispielsweise manuell oder über Elektromotoren angetrieben. Zusätzlich oder alternativ weist er eine Verbindung zu einem Druckluft- oder einem Hydraulik-System des Schienenfahrzeugs auf, wodurch der erste Mechanismus zur Höhenverstellung pneumatisch oder hydraulisch betätigbar ist.

Auch die zumindest eine Bedieneinheit ist insbesondere über einen weiteren, zweiten Mechanismus zur Höhenverstellung, auch zweiten Höhenverstellmechanismus genannt, in der Fahrerkabine angeordnet und somit zumindest höhenverstellbar. Der zweite Mechanismus zur Höhenverstellung ist insbesondere so ausgebildet, dass die zumindest eine Bedieneinheit für sich und unabhängig vom ersten Mechanismus zur Höhenverstellung des Fahrersitzes höhenverstellbar ist.

Eine weitere Weiterbildung sieht vor, dass der Fahrersitz und/oder die zumindest eine Bedieneinheit derart ausgebildet sind, dass sie in horizontaler Richtung verschiebbar sind. Insbesondere umfassen der Fahrersitz und/oder die zumindest eine Bedieneinheit zumindest einen Mechanismus zur Änderung und somit zur Verringerung oder zur Vergrößerung eines Abstands in horizontaler Richtung zwischen dem Fahrersitz und der zumindest einen Bedieneinheit. Damit sind der Fahrersitz und/oder die zumindest eine Bedieneinheit tiefenverstellbar, wodurch der Mechanismus nachfolgend als Tiefenverstellmechanismus bezeichnet wird.

Die Einstellungsmöglichkeiten sind somit vielfältig, wodurch der Fahrersitz und die zumindest eine Bedieneinheit individuell auf die Bedürfnisse unterschiedlich großer Fahrer anpassbar sind.

Darüber hinaus weist ein weiterbildungsgemäßes Schienenfahrzeug eine Fußleiste zum Abstellen der Füße des Fahrers in der Fahrerkabine auf, welche in ihrer Höhe und/oder in ihrem Abstand zum Fahrersitz in horizontaler Richtung verstellbar ist. Dazu ist ein weiterer Verstellmechanismus vorgesehen, mittels welchem die Fußleiste mit dem Schienenfahrzeug verbunden ist. In einer Ausführungsform ist die Fußleiste derart ausgebildet, dass sie in einer Endposition im Fußboden der Fahrerkabine versenkbar ist.

Mittels einer Memory-Funktion, kann jeder Fahrer eine optimale Sitz- und/oder Stehposition abspeichern und wiederherstellen, wodurch der, insbesondere erste, Mechanismus zur Höhenverstellung des Fahrersitzes und der, insbesondere zweite, Mechanismus zur Höhenverstellung der zumindest einen Bedieneinheit und/oder der Tiefenverstellmechanismus des Fahrersitzes und/oder der zumindest einen Bedieneinheit und/oder der Verstellmechanismus der Fußleiste miteinander gekoppelt sind, so dass diese automatisch verstellt werden, wenn der Fahrersitz in seiner Höhe und/oder von der Sitzposition in die Stehposition verstellt wird.

Weitergebildet umfasst der Fahrersitz Armlehnen, welche weitere Bedienelemente zur Steuerung des Schienenfahrzeugs, insbesondere ein Geschwindigkeitsregler und/oder ein Schnellbremstaster, umfassen. Die weiteren Bedienelemente sind an den Armlehnen angeordnet oder in diese integriert. Auch Bedienelemente zur Steuerung der Höhe des Fahrersitzes und/oder der Bedieneinheit und/oder zur Änderung des Abstands zwischen Fahrersitz und Bedieneinheit und/oder zum Herunterklappen der Sitzfläche des Fahrersitzes können in die Armlehnen integriert sein.

Gemäß einer weiteren Weiterbildung der Erfindung umfasst der Fahrersitz eine Kopfstütze, welche beispielsweise an ein oberes Ende der Rückenlehne anschließend angeordnet ist und welche ebenfalls zusammen mit der Rückenlehne höhenverstellbar ausgebildet ist. In die Kopfstütze sind Lautsprecher und gegebenenfalls zumindest ein Mikrofon für ein Sprechfunkgerät integriert.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt eine Fahrerkabine eines erfindungsgemäßen Schienenfahrzeugs mit einem Fahrersitz in einer Sitzstellung,
- Fig. 2: zeigt die Fahrerkabine aus Fig. 1 mit einem Fahrersitz in einer Stehstellung.

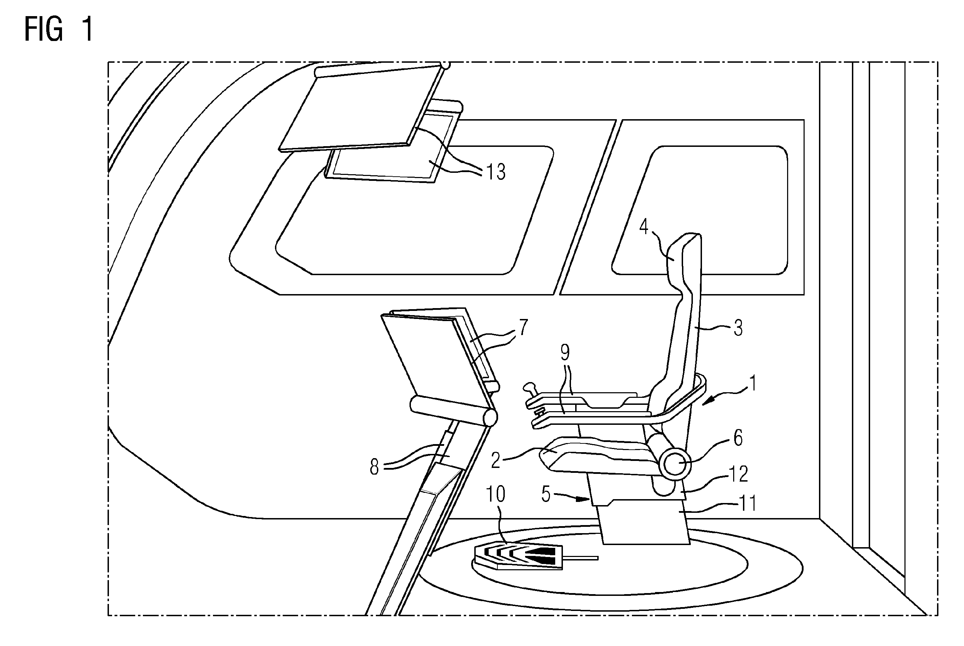

In Fig. 1 ist ein Fahrersitz 1 eines erfindungsgemäßen Schienenfahrzeugs mit in einer ersten Stellung, der Sitzstellung, dargestellt. Er umfasst eine Sitzfläche 2, eine Rückenlehne 3, eine Kopfstütze 4 und ein Standbein 5, welches einseitig neben der Sitzfläche 2 angeordnet ist. Die Sitzfläche 2 ist an einer parallel zum Fußboden verlaufenden Achse 6 befestigt. An der Achse 6 ist auch die Rückenlehne 3 befestigt, und zwar so, dass die Rückenlehne 3 des Fahrersitzes 1 um die Achse 6 neigbar ist.

Vor dem Fahrersitz sind zwei Säulen 8 mit jeweils einem Touch-Display als Bedieneinheiten 7 angeordnet. Zwei weitere Displays 13 sind in diesem Ausführungsbeispiel unter einer Decke der Fahrerkabine fest installiert.

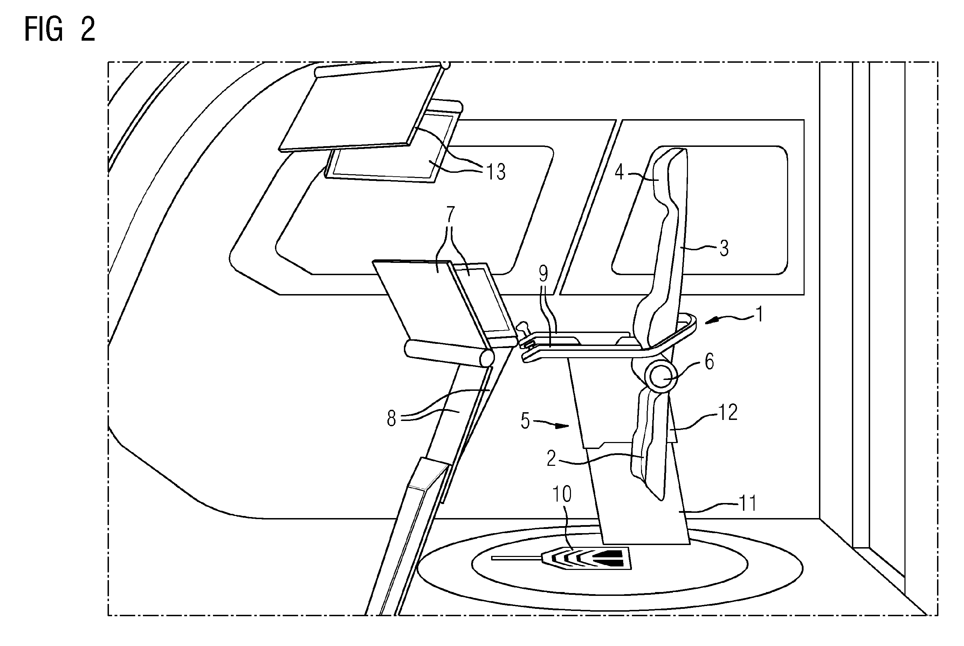

In der Sitzstellung sind der Fahrersitz 1 und die Bedieneinheiten 7 so zueinander ausgerichtet, dass sie von dem Fahrer aus bedienbar sind, welcher auf dem Fahrersitz 1 sitzt. In einer zweiten Stellung, der Stehstellung, welche in Fig. 2 veranschaulicht ist, ist der Fahrersitz 1 hingegen als Stehlehne ausgebildet und so zu den Bedieneinheiten 7 ausgerichtet, dass sie von einem Fahrer aus bedienbar sind, welcher sich stehend an die Stehlehne anlehnt.

Der Fahrersitz 1 ist einfach und schnell in eine Stehlehne umgebaut, welche dem stehenden Fahrer zum Anlehnen dient. Dazu wird die Sitzfläche 2 des Fahrersitzes 1 heruntergeklappt, welche heruntergeklappte Sitzfläche 2 des Fahrersitzes 1 zusammen mit der Rückenlehne 3 des Fahrersitzes 1 die Stehlehne bildet.

Zur Realisierung des Klappmechanismus zum Herunterklappen der Sitzfläche, ist diese in einfacher Weise um die Achse 6 drehbar gelagert. Dadurch liegt die heruntergeklappte Sitzfläche 2, insbesondere fluchtend zur Rückenlehne 3, im Wesentlichen in einer gemeinsamen Ebene mit der Rückenlehne 3. Natürlich können die Sitzfläche 2 und die Rückenlehne 3 ergonomisch ausgeformt sein und dadurch keine gemeinsame ebene Fläche bilden.

Um eine gute Ergonomie für verschiedene große Fahrer zu erreichen, sind sowohl der Fahrersitz, auch als Stehlehne, sowie die Bedieneinheiten 7 höhenverstellbar in der Fahrerkabine des Schienenfahrzeugs angeordnet, so dass sich unterschiedlich große Fahrer stehend an die Sitzfläche 2 und die Rückenlehne 3 anlehnen können und sich die Bedieneinheiten 7 in einer ergonomisch günstigen Position befindet.

Dazu weist der in den Fig. 1 und Fig. 2 skizzierte Fahrersitz 1 zwei Mechanismen zur Höhenverstellung auf. Das Standbein 5 ist hier als Teleskopschiene ausgebildet. Es umfasst eine innere, fest mit dem Fußboden der Fahrerkabine verbundene, erste Schiene 11 und eine entlang dieser ersten Schiene 11 verschiebbare, zweite 12. Die Achse 6 ist mit dem Standbein 5 so verbunden, dass sie relativ zur ersten und zur zweiten Schiene 12 des Standbeins 5 in einer Richtung mit vertikaler Richtungskomponente verschiebbar ist. An der zweiten Schiene 12 wiederum sind Armlehnen 9 des Fahrersitzes fest angeordnet. Somit sind auch die Armlehnen 9 zur Sitzfläche 2 respektive zur Achse 6 in der Höhe verstellbar.

Eine Fußleiste 10 ist ebenfalls höhen- und tiefenverstellbar in der Fahrerkabine angeordnet. In Fig. 1 bildet sie ein geneigtes Podest zum Abstellen der Füße des Fahrers. In Fig. 2 ist sie im Fußboden der Fahrerkabine versenkt.

Die Säulen 8 der Bedieneinheiten 7 sind analog zum Standbein 5 des Fahrersitzes teleskopierbar ausgebildet, um die Bedieneinheiten 7 in der Höhe zu verstellen.

## Patentansprüche

1. Schienenfahrzeug mit zumindest einer Fahrerkabine, welche mindestens eine Bedieneinheit (7) zur Steuerung des Schienenfahrzeugs und zumindest einen Fahrersitz (1) mit einer Rückenlehne (3) und einer Sitzfläche (2) umfasst, welche Bedieneinheit (7) in einer ersten Stellung ergonomisch so zum Fahrersitz (1) ausgerichtet ist, dass sie von einem auf dem Fahrersitz (1) sitzenden Fahrer aus bedienbar ist, **dadurch gekennzeichnet, dass** der Fahrersitz (1) höhenverstellbar und die Sitzfläche (2) des Fahrersitzes (1) herunterklappbar ausgebildet sind, so dass bei heruntergeklappter Sitzfläche (2), die Sitzfläche (2) und die Rückenlehne (3) des Fahrersitzes (1) eine Stehlehne für den Fahrer bilden, wobei die zumindest eine Bedieneinheit (7) höhenverstellbar ausgebildet ist, so dass sie in einer zweiten Stellung ergonomisch so zur Stehlehne ausgerichtet ist, dass sie von einem sich stehend an die Stehlehne anlehnenden Fahrer aus bedienbar ist.

2. Schienenfahrzeug nach Anspruch 1, **dadurch gekennzeichnet, dass** der Fahrersitz (1) zur Befestigung der Sitzfläche (2) und der Rückenlehne (3) mit der Fahrerkabine des Schienenfahrzeugs zumindest ein Standbein (5) und eine horizontale Achse (6) umfasst, welche mit dem Standbein (5) verbunden ist, wobei die Sitzfläche (2) und die Rückenlehne (3) des Fahrersitzes (1) mit der Achse (6) verbunden sind, wobei die Sitzfläche (2) des Fahrersitzes (1) schwenkbar um die Achse (6) gelagert ist.

3. Schienenfahrzeug nach einem der Ansprüche 1 oder 2, **dadurch gekennzeichnet, dass** der Fahrersitz (1) und/oder die zumindest eine Bedieneinheit (7) horizontal verschiebbar ausgebildet sind zur Änderung eines Abstands zwischen dem Fahrersitz (1) und der zumindest einen Bedieneinheit (7).

4. Schienenfahrzeug nach einem der Ansprüche 1 bis 3, **dadurch gekennzeichnet, dass** die zumindest eine Bedieneinheit (7) wenigstens ein Display umfasst.

5. Schienenfahrzeug nach einem der Ansprüche 1 bis 4, **dadurch gekennzeichnet, dass** der Fahrersitz Armlehnen (9) umfasst, an welchen weitere Bedienelemente zur Steuerung des Schienenfahrzeugs angeordnet sind.

6. Schienenfahrzeug nach einem der Ansprüche 1 bis 5, **dadurch gekennzeichnet, dass** der Fahrersitz (1) eine Kopfstütze (4) umfasst, in welche zumindest ein Lautsprecher für ein Sprechfunkgerät integriert ist.

7. Schienenfahrzeug nach einem der Ansprüche 1 bis 6, **dadurch gekennzeichnet, dass** es eine Fußleiste (10) zum Abstellen der Füße des Fahrers aufweist, welche Fußleiste (10) derart ausgebildet und an einem Fußboden der Fahrerkabine angeordnet ist, dass sie in ihrer Höhe und/oder in horizontaler Richtung verstellbar ist.
